# EUROPÄISCHE PATENTSCHRIFT

(11) **EP 4 195 552 B1**
(45) Veröffentlichungstag und Bekanntmachung des Hinweises auf die Patenterteilung: **20.11.2024**
(21) Anmeldenummer: 21213967.9
(22) Anmeldetag: 13.12.2021
(51) Int. Cl.: H04W 4/80, H04W 4/06, H04L 1/18, H04L 1/00, H04L 1/08, H04H 20/38, H04H 20/53, H04L 1/1829, H04L 1/1867, H04W 4/40, H04W 4/70

(54) **VERFAHREN ZUM ÜBERMITTELN EINES NACHRICHTENINHALTS MITTELS EINER MEHRZAHL VON BROADCAST-NACHRICHTEN, TELEKOMMUNIKATIONSNETZ ODER SYSTEM ZUM ÜBERMITTELN EINES NACHRICHTENINHALTS MITTELS EINER MEHRZAHL VON BROADCAST-NACHRICHTEN, KOMMUNIKATIONSTEILNEHMER, INSBESONDERE SENDER ODER EMPFÄNGER, COMPUTERPROGRAMM UND COMPUTERLESBARES MEDIUM**
METHOD FOR TRANSMITTING THE CONTENT OF A MESSAGE BY MEANS OF A PLURALITY OF BROADCAST MESSAGES, TELECOMMUNICATION NETWORK OR SYSTEM FOR TRANSMITTING THE CONTENT OF A MESSAGE BY MEANS OF A PLURALITY OF BROADCAST MESSAGES, COMMUNICATION USERS, IN PARTICULAR TRANSMITTERS OR RECEIVERS, COMPUTER PROGRAM AND COMPUTER READABLE MEDIUM
PROCÉDÉ DE TRANSMISSION D'UN CONTENU DE MESSAGE AU MOYEN D'UNE PLURALITÉ DE MESSAGES DE DIFFUSION, RÉSEAU OU SYSTÈME DE TÉLÉCOMMUNICATIONS PERMETTANT DE TRANSMETTRE UN CONTENU DE MESSAGE AU MOYEN DE LA PLURALITÉ DE MESSAGES DE DIFFUSION, PARTICIPANT À LA COMMUNICATION, EN PARTICULIER ÉMETTEUR OU RÉCEPTEUR, PROGRAMME INFORMATIQUE ET SUPPORT LISIBLE PAR ORDINATEUR

(43) Veröffentlichungstag der Anmeldung: 14.06.2023
(73) Patentinhaber: Deutsche Telekom AG, 53113 Bonn (DE)
(72) Erfinder: SUDHOLT, Frank, 53604 Bad Honnef (DE); SCHMITT, Florian-Leon, 53227 Bonn (DE)
(74) Vertreter: Schwöbel, Thilo K.

(56) Entgegenhaltungen:
- GHOLIBEIGI MOZHDEH: "RELIABLE BROADCASTING IN VEHICULAR NETWORKS", UNIVERSITY OF TWENTE, 13 December 2018 (2018-12-13), Twente, Netherlands, pages 1 - 185, XP055921315, ISBN: 978-90-36-54690-4, Retrieved from the Internet <URL:https://web.archive.org/web/20190503150733if_/https://ris.utwente.nl/ws/portalfiles/portal/77611625/Mozhdeh_Gholibeigi_Ph.D_Thesis.pdf> [retrieved on 20220516], DOI: 10.3990/1.9789036546904
- GHOLIBEIGI MOZHDEH ET AL: "Analysis of a receiver-based reliable broadcast approach for vehicular networks", 2014 IEEE VEHICULAR NETWORKING CONFERENCE (VNC), IEEE, 3 December 2014 (2014-12-03), pages 89 - 96, XP032723524, DOI: 10.1109/VNC.2014.7013314

## Beschreibung

### Stand der Technik

Die Erfindung betrifft ein Verfahren zum Übermitteln eines Nachrichteninhalts mittels einer Mehrzahl von Broadcast-Nachrichten, wobei die Übermittlung des Nachrichteninhalts zwischen einer Mehrzahl von Kommunikationsteilnehmern einer Gruppe von Kommunikationsteilnehmern erfolgt, wobei ein Sender wenigstens eine Broadcast-Nachricht sendet, wobei der Nachrichteninhalt von dem Sender an eine Mehrzahl von Empfängern der Gruppe von Kommunikationsteilnehmern mittels der wenigstens einen Broadcast-Nachricht mittels einer PC5-Sidelink Funktionalität, insbesondere unter Nutzung der Mode-4-Funktionalität, gesendet wird.

Die Erfindung betrifft des Weiteren ein Telekommunikationsnetz oder System zum Übermitteln eines Nachrichteninhalts mittels einer Mehrzahl von Broadcast-Nachrichten, insbesondere umfassend eine Mehrzahl von Teilnehmern einer Gruppe von Kommunikationsteilnehmern, wobei die Übermittlung des Nachrichteninhalts zwischen der Mehrzahl von Teilnehmern der Gruppe von Kommunikationsteilnehmern erfolgt, wobei ein Sender wenigstens eine Broadcast-Nachricht sendet, wobei der Nachrichteninhalt von dem Sender an eine Mehrzahl von Empfängern der Gruppe von Kommunikationsteilnehmern mittels der wenigstens einen Broadcast-Nachricht mittels einer PC5-Sidelink Funktionalität, insbesondere unter Nutzung der Mode-4-Funktionalität, gesendet wird.

Die Erfindung betrifft ferner einen Kommunikationsteilnehmer, insbesondere Sender oder Empfänger zur Verwendung in einem erfindungsgemäßen Telekommunikationsnetz oder in einem erfindungsgemäßen System.

Des Weiteren betrifft die Erfindung ein Computerprogramm umfassend Befehle, mit deren Hilfe die Schritte eines erfindungsgemäßen Verfahrens durchführbar sind, und ein computerlesbares Medium, vorgesehen zur Speicherung eines Computerprogramms, oder ein Datenträgersignal, vorgesehen zur Übertragung eines Computerprogramms, wobei das computerlesbare Medium oder das Datenträgersignal das erfindungsgemäße Computerprogramm speichert oder überträgt.

Bei vorbekannten Telekommunikationsnetzen ist es bereits bekannt, eine Gerät-zu-Gerät-Kommunikation (device-to-device communication) zu verwenden. Dies ist auch der Fall bei der zellularen V2X-Kmmunikation (C-V2X), welche die Möglichkeit zur Verfügung stellt, dass Kommunikationsteilnehmer bzw. Verkehrsteilnehmer Nachrichten authentisch bzw. autorisiert, anonym, sowie direkt (d.h. ohne Einbindung des Mobilfunknetzes, insbesondere über die PC5 Sidelink Funktionalität) in einer begrenzten Umgebung austauschen, insbesondere um Hauptanwendungsfälle wie Verkehrssicherheit, Verkehrsmanagement und Infotaiment umsetzen zu können.

Da die "direkten" (Sidelink) Nachrichten als Broadcast-/Multicast-Nachrichten (ohne Einbindung der Mobilfunk-Infrastruktur) gesendet werden und nur in einem Gebiet um den Sender, welches der Reichweite des Senders entspricht, empfangen werden können, kommt es vor, dass Kommunikationsteilnehmer (bzw. Verkehrsteilnehmer), für die diese Informationen relevant sind, eine oder mehrere Nachrichten der V2X-Kommunikation bzw. Nachrichten-Session nicht erhalten bzw. empfangen.

Dies kann in nachteiliger Weise zur Folge haben, dass eine Nachricht oder ein Teil der Nachrichten einer Nachrichten-Session für einen Kommunikationsteilnehmer nicht zur Verfügung ist/sind und in der Folge somit eine Anwendungssituation nicht zufriedenstellend umgesetzt werden kann, insbesondere für den Fall, dass der Kommunikationsteilnehmer oder Verkehrsteilnehmer etwa kritische Warnungen, die die Verkehrssicherheit betreffen, nicht erhält.

### "GHOLIBEIGI MOZHDEH: "RELIABLE BROADCASTING IN VEHICULAR

NETWORKS",UNIVERSITY OF TWENTE, 13. Dezember 2018, XP055921315, offenbart ein System und Verfahren zum broadcastbasierten Austausch von Vehicle-to-X Nachrichten, bei dem fehlende, d.h. nicht erfolgreich empfangene Pakete durch Überprüfung der empfangenen Sequenznummern empfangener Pakete erkannt und daraufhin erneut von benachbarten Fahrzeugen angefordert werden.

### Offenbarung der Erfindung

Der Erfindung liegt die Aufgabe zugrunde, ein Verfahren zum Übermitteln eines Nachrichteninhalts mittels einer Mehrzahl von Broadcast-Nachrichten anzugeben, wobei die Übermittlung des Nachrichteninhalts zwischen einer Mehrzahl von Kommunikationsteilnehmern einer Gruppe von Kommunikationsteilnehmern mittels einer PC5-Sidelink Funktionalität, insbesondere unter Nutzung der Mode-4-Funktionalität, erfolgt, wobei es das Verfahren in vergleichsweise einfacher und effizienter Weise ermöglicht, dass die Nachrichten einer Nachrichten-Session bei einem Kommunikationsteilnehmer vollständig vorliegen oder zur Verfügung stehen.

Die Aufgabe wird erfindungsgemäß gelöst durch ein Verfahren zum Übermitteln eines Nachrichteninhalts mittels einer Mehrzahl von Broadcast-Nachrichten, wobei die Übermittlung des Nachrichteninhalts zwischen einer Mehrzahl von Kommunikationsteilnehmern einer Gruppe von Kommunikationsteilnehmern erfolgt, wobei eine Mehrzahl an Broadcast-Nachrichten zwischen den Kommunikationsteilnehmern der Gruppe von Kommunikationsteilnehmern gesendet und empfangen werden, wobei die Mehrzahl dieser Broadcast-Nachrichten Teil einer Nachrichten-Session von Broadcast-Nachrichten ist, wobei jede Broadcast-Nachricht der Nachrichten-Session eine Sequenzinformation aufweist und jeder Kommunikationsteilnehmer zum Senden einer Broadcast-Nachricht deren, eine Sequenznummer enthaltende Sequenzinformation so setzt, das deren Sequenznummer gegenüber der höchsten, durch den Kommunikationsteilnehmer empfangenen Sequenznummer erhöht ist, wobei ein Sender wenigstens eine Broadcast-Nachricht sendet, wobei der Nachrichteninhalt von dem Sender an eine Mehrzahl von Empfängern der Gruppe von Kommunikationsteilnehmern mittels der wenigstens einen Broadcast-Nachricht mittels einer PC5-Sidelink Funktionalität, insbesondere unter Nutzung der Mode-4-Funktionalität, gesendet wird,wobei das Verfahren zum Übermitteln des Nachrichteninhalts für den Fall, dass der Empfang des Nachrichteninhalts mittels der wenigstens einen Broadcast-Nachricht durch einen spezifischen Empfänger der Mehrzahl von Empfängern scheitert, die nachfolgenden Schritte umfasst: 1f
-- in einem ersten Schritt erkennt der spezifische Empfänger das Scheitern des Empfangs des Nachrichteninhalts mittels der wenigstens einen Broadcast-Nachricht, wobei die Erkennung des Scheiterns des Empfangs des Nachrichteninhalts basierend auf einer Sequenzinformation einer durch den spezifischen Empfänger empfangenen und der wenigstens einen Broadcast-Nachricht nachfolgenden Broadcast-Nachricht erfolgt, wobei eine solche Erkennung durch Vergleich mit einer Sequenzinformation einer ebenfalls durch den spezifischen Empfänger empfangenen und der wenigstens einen Broadcast-Nachricht vorausgehenden Broadcast-Nachricht erfolgt, 1f
-- in einem dem ersten Schritt nachfolgenden zweiten Schritt sendet der spezifische Empfänger mittels einer weiteren Broadcast-Nachricht eine Sendeaufforderung zur erneuten Übertragung des Nachrichteninhalts, 1f
-- in einem dem zweiten Schritt nachfolgenden dritten Schritt sendet einer der Mehrzahl von Kommunikationsteilnehmern der Gruppe von Kommunikationsteilnehmern den Nachrichteninhalt zum spezifischen Empfänger.

Es ist dadurch gemäß der vorliegenden Erfindung in vorteilhafter Weise möglich, dass in vergleichsweise einfacher Art und Weise die Nachrichten einer Nachrichten-Session bei einem Kommunikationsteilnehmer vollständig vorliegen oder zur Verfügung stehen - d.h. dass die Übermittlung des betreffenden Nachrichteninhalts tatsächlich erfolgreich erfolgt, d.h. sowohl ausgesendet wird als auch vom jeweiligen Empfänger empfangen wird, auch wenn der Empfang des Nachrichteninhalts mittels der wenigstens einen Broadcast-Nachricht durch einen spezifischen Empfänger (zunächst) scheitert. Hierbei ist es erfindungsgemäß insbesondere vorteilhaft möglich, dass die Anzahl der zu einer etwaigen Vervollständigung der Nachrichten einer Nachrichten-Session verwendeten bzw. benötigten Nachrichten (d.h. zur erneuten Übertragung des Nachrichteninhalts) vergleichsweise klein gehalten werden kann. Insbesondere ist erfindungsgemäß eine Kommunikation nach der PC5-Sidelink Spezifikation - wie für LTE realisiert - hierzu geeignet.

Ursachen dafür, dass der Empfang des Nachrichteninhalts mittels der wenigstens einen Broadcast-Nachricht durch einen spezifischen Empfänger der Mehrzahl von Empfängern (zunächst) scheitert, umfassen beispielsweise einen oder mehrere der folgenden
-- der Empfang des Nachrichteninhalts durch den spezifischen Empfänger (bzw. Kommunikationsteilnehmer) ist kurzfristig durch ein Hindernis unterbrochen,
-- der spezifische Empfänger (bzw. Kommunikationsteilnehmer) hat zwischenzeitlich oder vorübergehend den Empfangsbereich des Senders verlassen,
-- der spezifische Empfänger (bzw. Kommunikationsteilnehmer) kommt erst später in das Empfangsgebiet (des Senders der jeweils betrachteten wenigstens einen Broadcast-Nachricht).
Erfindungsgemäß wird somit die Möglichkeit bereitgestellt, dass - im Fall einer verpassten Nachricht, insbesondere einer Broadcast-Nachricht (bzw. des mit dieser Nachricht transportierten Nachrichteninhalts), etwa eine kritische Warnung, welche die Verkehrssicherheit betrifft - ein Kommunikationsteilnehmer (bzw. Verkehrsteilnehmer), d.h. der spezifische Empfänger, die Möglichkeit erhält, den verpassten Nachrichteninhalt, welcher ggf. auch eine Mehrzahl von Broadcast-Nachrichten umfasst bzw. durch eine Mehrzahl von Broadcast-Nachrichten zuvor transportiert wurde, erneut (durch einen oder mehrere der Kommunikationsteilnehmer der Gruppe von Kommunikationsteilnehmer) zugesandt zu bekommen.

Das erfindungsgemäße Verfahren bezieht sich auf die Übermittlung eines Nachrichteninhalts innerhalb einer Gruppe von Kommunikationsteilnehmern mittels Broadcast-Nachrichten unter Nutzung der PC5-Sidelink Funktionalität, insbesondere unter Nutzung der Mode-4-Funktionalität. In der Regel sendet einer der Kommunikationsteilnehmer (d.h. der Sender) mittels einer Broadcast-Nachricht (bzw. mittels wenigstens einer Broadcast-Nachricht) den betrachteten Nachrichteninhalt aus. In der Regel bzw. in der Mehrzahl der Fälle wird diese Broadcast-Nachricht (und damit der Nachrichteninhalt bzw. die zu übermittelnde Nutzinformation) von den anderen Kommunikationsteilnehmern der Gruppe (d.h. den Empfängern) ordnungsgemäß empfangen. Die Broadcast-Nachricht ist in der Regel Teil einer Nachrichten-Session von Broadcast-Nachrichten, d.h. einer Abfolge bzw. einer Reihe von Broadcast-Nachrichten, welche in der Regel in der Weise angeordnet sind, dass eine Anordnung bzw. Reihung vorliegt; die Nachrichten-Session wird in der Regel von einem der Kommunikationsteilnehmern initiiert, wobei die Broadcast-Nachricht mit dem betrachteten Nachrichteninhalt von dem initiierenden Kommunikationsteilnehmer stammen kann, wobei dies jedoch nicht notwendigerweise der Fall sein muss, d.h. es kann auch jeder andere Kommunikationsteilnehmer der Sender sein. Für den Fall, dass einer der Kommunikationsteilnehmer (der Gruppe von Kommunikationsteilnehmern), d.h. einer der Empfänger (dieser Kommunikationsteilnehmer wird auch als spezifischer Empfänger bezeichnet), die betreffende (betrachtete) Broadcast-Nachricht (d.h. die wenigstens eine Broadcast-Nachricht, umfassend den betrachteten Nachrichteninhalt) nicht (ordnungsgemäß) empfängt (d.h. der Empfang dieser Broadcast-Nachricht scheitert zunächst), ist es gemäß der vorliegenden Erfindung vorgesehen, dass in einfacher und effizienter Weise dieser Nachrichteninhalt doch noch zum spezifischen Empfänger gelangen kann. In einem ersten Schritt ist es zunächst vorgesehen, dass der spezifische Empfänger das Scheitern des Empfangs des Nachrichteninhalts mittels der wenigstens einen Broadcast-Nachricht erkennt. In einem dem ersten Schritt nachfolgenden zweiten Schritt sendet der spezifische Empfänger mittels einer weiteren Broadcast-Nachricht eine Sendeaufforderung zur erneuten Übertragung des Nachrichteninhalts. In einem dem zweiten Schritt nachfolgenden dritten Schritt sendet einer der Mehrzahl von Kommunikationsteilnehmern der Gruppe von Kommunikationsteilnehmern den Nachrichteninhalt zum spezifischen Empfänger.

Gemäß der vorliegenden Erfindung ist es vorgesehen, dass die Erkennung des Scheiterns des Empfangs des Nachrichteninhalts während des ersten Schritts basierend auf einer Sequenzinformation einer durch den spezifischen Empfänger empfangenen und der wenigstens einen Broadcast-Nachricht nachfolgenden Broadcast-Nachricht erfolgt, wobei eine solche Erkennung insbesondere durch Vergleich mit einer Sequenzinformation einer ebenfalls durch den spezifischen Empfänger empfangenen und der wenigstens einen Broadcast-Nachricht vorausgehenden Broadcast-Nachricht erfolgt.

Hierdurch ist es erfindungsgemäß vorteilhaft möglich, dass nicht erfolgreiche Nachrichtenübertragungen bzw. nicht erfolgreiche Empfangsvorgänge ohne spezifische Sicherungsmechanismen und insbesondere ohne die Erzeugung von in jedem einzelnen Fall von zu übermittelnden Nachrichteninhalten durchzuführendem weiteren Funkverkehr zeitnah detektiert werden können.

Gemäß der vorliegenden Erfindung ist es vorgesehen, dass eine Mehrzahl an Broadcast-Nachrichten zwischen der Kommunikationsteilnehmern der Gruppe von Kommunikationsteilnehmern gesendet und empfangen werden, wobei die Mehrzahl dieser Broadcast-Nachrichten Teil einer Nachrichten-Session von Broadcast-Nachrichten ist, wobei jede Broadcast-Nachricht der Nachrichten-Session eine Sequenzinformation aufweist, wobei insbesondere die Sequenzinformationen von aufeinanderfolgenden Broadcast-Nachrichten innerhalb der Nachrichten-Session erhöht sind, insbesondere um eine Zähleinheit erhöht sind.

Hierdurch ist es erfindungsgemäß in vorteilhafter Weise möglich, dass in einfacher Weise eine Information über die Abfolge der verschiedenen Broadcast-Nachrichten innerhalb der Nachrichten-Session übermittelt wird, so dass auch in einfacher Weise Lücken innerhalb der Abfolge der Nachrichten festgestellt werden können.

Gemäß einer weiteren Ausführungsform der vorliegenden Erfindung ist es bevorzugt vorgesehen, dass während des dritten Schritts der Nachrichteninhalt mittels einer Nachricht gesendet wird, in welcher der spezifische Empfänger explizit als Empfänger benannt ist.

Hierdurch ist es erfindungsgemäß insbesondere vorteilhaft möglich, dass die im Falle einer verpassten Nachricht bzw. die im Falle eines Scheiterns des Empfangs einer Broadcast-Nachricht erforderliche zusätzliche Broadcast-Nachricht dahingehend (insbesondere für die anderen, von diesem Scheitern nicht betroffenen Kommunikationsteilnehmer) markiert wird, dass eine solche Broadcast-Nachricht zielgerichtet an den spezifischen Empfänger (d.h. denjenigen Kommunikationsteilnehmer, welcher die ursprüngliche Nachricht verpasst hat) gerichtet ist.

Gemäß einer weiteren Ausführungsform der vorliegenden Erfindung ist es bevorzugt vorgesehen, dass während des dritten Schritts der Nachrichteninhalt durch den Sender der wenigstens einen Broadcast-Nachricht an den spezifischen Empfänger gesendet wird, insbesondere während eines ersten Zeitintervalls nach dem Senden - während des zweiten Schritts - der weiteren Broadcast-Nachricht durch den spezifischen Empfänger.

Hierdurch ist es gemäß solcher Ausführungsformen der Erfindung vorteilhaft möglich, dass in definierter Weise ein bestimmter der Kommunikationsteilnehmer die verpasste Nachricht bzw. den verpassten Nachrichteninhalt an den spezifischen Empfänger sendet.

Gemäß einer weiteren Ausführungsform der vorliegenden Erfindung ist es bevorzugt vorgesehen, dass während des dritten Schritts der Nachrichteninhalt durch einen vom Sender verschiedenen Kommunikationsteilnehmer der Gruppe von Kommunikationsteilnehmern an den spezifischen Empfänger gesendet wird, insbesondere während eines zweiten Zeitintervalls nach dem Senden - während des zweiten Schritts - der weiteren Broadcast-Nachricht durch den spezifischen Empfänger, wobei das zweite Zeitintervall insbesondere nach Ablauf des ersten Zeitintervalls startet.

Hierdurch ist es gemäß solcher Ausführungsformen der Erfindung ebenfalls vorteilhaft möglich, dass die verpasste Nachricht bzw. der verpasste Nachrichteninhalt mit größerer Sicherheit in definierter Weise durch einen weiteren bestimmten der Kommunikationsteilnehmer an den spezifischen Empfänger gesendet wird.

Gemäß einer weiteren Ausführungsform der vorliegenden Erfindung ist es bevorzugt vorgesehen, dass als Teil der Nachrichten-Session von Broadcast-Nachrichten wenigstens eine erste Broadcast-Nachricht von einem ersten Kommunikationsteilnehmer der Gruppe von Kommunikationsteilnehmern ausgesendet wird und wenigstens eine zweite Broadcast-Nachricht von einem zweiten Kommunikationsteilnehmer der Gruppe von Kommunikationsteilnehmern ausgesendet wird, wobei sowohl die erste Broadcast-Nachricht als auch die zweite Broadcast-Nachricht die gleiche oder gleichlautende Sequenzinformation aufweisen, wobei insbesondere eine von einem weiteren Kommunikationsteilnehmer der Gruppe von Kommunikationsteilnehmern ausgesendete weitere Broadcast-Nachricht eine um zwei Zähleinheiten inkrementierte Sequenzinformation aufweist.

Hierdurch ist es gemäß solcher Ausführungsformen der Erfindung vorteilhaft möglich, das erfindungsgemäße Verfahren in einfacher und sicherer Weise auch dann auszuführen, wenn zwei Broadcast-Nachrichten zum gleichen Zeitpunkt oder fast zum gleichen Zeitpunkt versendet werden.

Gemäß einer weiteren Ausführungsform der vorliegenden Erfindung ist es bevorzugt vorgesehen, dass die Nachrichten-Session von Broadcast-Nachrichten von einem spezifischen Kommunikationsteilnehmer der Gruppe von Kommunikationsteilnehmern mittels einer initialen Broadcast-Nachricht gestartet oder initiiert wird, wobei während des dritten Schritts der Nachrichteninhalt durch den spezifischen Kommunikationsteilnehmer an den spezifischen Empfänger gesendet wird, insbesondere während eines ersten Zeitintervalls nach dem Senden - während des zweiten Schritts - der weiteren Broadcast-Nachricht durch den spezifischen Empfänger, wobei insbesondere während des dritten Schritts der Nachrichteninhalt durch einen weiteren spezifischen Kommunikationsteilnehmer an den spezifischen Empfänger gesendet wird, wobei der weitere spezifische Kommunikationsteilnehmer derjenige Kommunikationsteilnehmer ist, welcher die auf die initiale Broadcast-Nachricht nachfolgende Broadcast-Nachricht gesendet hat, wobei der Nachrichteninhalt an den spezifischen Empfänger insbesondere während eines zweiten Zeitintervalls nach dem Senden - während des zweiten Schritts - der weiteren Broadcast-Nachricht durch den spezifischen Empfänger gesendet wird, wobei das zweite Zeitintervall insbesondere nach Ablauf des ersten Zeitintervalls startet.

Hierdurch ist es gemäß einer solchen Ausführungsformen der Erfindung vorteilhaft möglich, das erfindungsgemäße Verfahren in einfacher und sicherer Weise auszuführen.

Gemäß einer weiteren Ausführungsform der vorliegenden Erfindung ist es bevorzugt vorgesehen, dass
-- die Broadcast-Nachrichten der Nachrichten-Session oder jedenfalls deren jeweiliger Nachrichteninhalt von den Kommunikationsteilnehmern der Gruppe von Kommunikationsteilnehmern gespeichert werden,
-- oder dass die Broadcast-Nachrichten der Nachrichten-Session oder jedenfalls deren jeweiliger Nachrichteninhalt von einem, insbesondere dem spezifischen, Kommunikationsteilnehmer der Gruppe von Kommunikationsteilnehmern gespeichert werden.

Des Weiteren wird die Aufgabe gelöst durch ein Telekommunikationsnetz oder System zum Übermitteln eines Nachrichteninhalts mittels einer Mehrzahl von Broadcast-Nachrichten, insbesondere umfassend eine Mehrzahl von Teilnehmern einer Gruppe von Kommunikationsteilnehmern, wobei die Übermittlung des Nachrichteninhalts zwischen der Mehrzahl von Teilnehmern der Gruppe von Kommunikationsteilnehmern erfolgt, wobei ein Sender wenigstens eine Broadcast-Nachricht sendet, wobei der Nachrichteninhalt von dem Sender an eine Mehrzahl von Empfängern der Gruppe von Kommunikationsteilnehmern mittels der wenigstens einen Broadcast-Nachricht mittels einer PC5-Sidelink Funktionalität, insbesondere unter Nutzung der Mode-4-Funktionalität, gesendet wird,
wobei das Telekommunikationsnetz oder das System derart konfiguriert ist, dass für den Fall, dass der Empfang des Nachrichteninhalts mittels der wenigstens einen Broadcast-Nachricht durch einen spezifischen Empfänger der Mehrzahl von Empfängern scheitert,
-- der spezifische Empfänger konfiguriert ist das Scheitern des Empfangs des Nachrichteninhalts mittels der wenigstens einen Broadcast-Nachricht zu erkennen,
-- der spezifische Empfänger konfiguriert -ist, mittels einer weiteren Broadcast-Nachricht eine Sendeaufforderung zur erneuten Übertragung des Nachrichteninhalts zu senden,
-- einer der Mehrzahl von Teilnehmern der Gruppe von Kommunikationsteilnehmern konfiguriert ist, den Nachrichteninhalt zum spezifischen Empfänger zu senden.

Es ist dadurch gemäß der vorliegenden Erfindung in vorteilhafter Weise möglich, ein zum erfindungsgemäßen Verfahren korrespondierendes erfindungsgemäßes Telekommunikationsnetz oder System bereitzustellen.

Die Aufgabe wird ferner gelöst durch einen Kommunikationsteilnehmer, insbesondere Sender oder Empfänger zur Verwendung in einem erfindungsgemäßen Telekommunikationsnetz oder System.

Des Weiteren wird die Ausgabe gelöst durch ein Computerprogramm umfassend Befehle, mit deren Hilfe die Schritte eines erfindungsgemäßen Verfahrens durchführbar sind, wenn das Computerprogramm auf einer programmierbaren Einrichtung, insbesondere auf einem Netzknoten in Form eines Senders und/oder Empfängers und/oder eines Kommunikationsteilnehmers, ausgeführt wird.

Des Weiteren wird die Aufgabe gelöst durch ein computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das erfindungsgemäße Computerprogramm speichert oder überträgt oder wobei das computerlesbare Medium oder das Datenträgersignal den auf einer programmierbaren Einrichtung, insbesondere auf einem Netzknoten in Form eines Senders und/oder Empfängers und/oder eines Kommunikationsteilnehmers, auszuführenden Teil des erfindungsgemäßen Computerprogramms speichert oder überträgt.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt eine schematische Situation einer Mehrzahl von Kommunikationsteilnehmern einer Gruppe von Kommunikationsteilnehmern innerhalb eines Sendegebiets bzw. Funkabdeckungsbereichs eines der Kommunikationsteilnehmer.
- **Figur 2**: zeigt schematisch ein Kommunikationsdiagramm der Durchführung und zur Veranschaulichung des erfindungsgemäßen Verfahrens.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

Die vorliegende Erfindung wird in Bezug auf bestimmte Ausführungsformen und mit Bezug auf bestimmte Zeichnungen beschrieben, aber die Erfindung ist nicht darauf beschränkt, sondern nur durch die Ansprüche. Die beschriebenen Zeichnungen sind nur schematisch und nicht einschränkend. In den Zeichnungen kann die Größe einiger Elemente übertrieben sein und nicht im Maßstab zur Veranschaulichung gezeichnet werden.

Wenn ein unbestimmter oder ein bestimmter Artikel verwendet wird, wenn auf ein einzelnes Substantiv Bezug genommen wird, z.B. "ein", "eine", "der", "die", "das", schließt dies einen Plural dieses Substantivs ein, sofern nicht ausdrücklich etwas anderes angegeben ist.

Darüber hinaus werden die Begriffe erste, zweite, dritte und dergleichen in der Beschreibung und in den Ansprüchen zur Unterscheidung zwischen ähnlichen Elementen und nicht unbedingt zur Beschreibung einer sequenziellen oder chronologischen Reihenfolge verwendet. Es ist zu verstehen, dass die so verwendeten Begriffe unter geeigneten Umständen austauschbar sind und dass die Ausführungsformen der hierin beschriebenen Erfindung in anderer Abfolge als den hierin beschriebenen oder veranschaulichten funktionieren können.

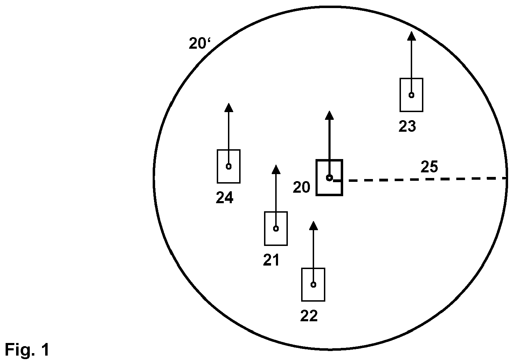

In Figur 1 ist schematisch eine Situation einer Mehrzahl von Kommunikationsteilnehmern einer Gruppe von Kommunikationsteilnehmern innerhalb eines Sendegebiets 20' bzw. Funkabdeckungsbereichs 20' eines ersten Kommunikationsteilnehmers 20 dargestellt. Neben dem ersten Kommunikationsteilnehmer 20 umfasst die Gruppe von (sich in räumlicher Nähe zueinander befindlichen) Kommunikationsteilnehmern in der dargestellten beispielhaften Situation noch einen zweiten Kommunikationsteilnehmer 21, einen dritten Kommunikationsteilnehmer 22, einen dritten Kommunikationsteilnehmer 23 und einen vierten Kommunikationsteilnehmer 24. Das Bezugszeichen 25 gibt schematisch den ungefähren Radius des (im Wesentlichen kreisförmig gedachten) Funkabdeckungsbereichs 20' an. Der Funkabdeckungsbereich 20` des ersten Kommunikationsteilnehmers 20 kann als derjenige räumliche Bereich angesehen werden, innerhalb dessen vom ersten Kommunikationsteilnehmer 20 ausgesandte bzw. abgestrahlte Funksignale, insbesondere umfassend Broadcast-Nachrichten, noch eine Signalstärke bzw. Signaleigenschaften derart aufweisen, dass andere Kommunikationsteilnehmer 21, 22, 23, 24 diese empfangen und verarbeiten, d.h. ggf. prozessieren und/oder entschlüsseln, können.

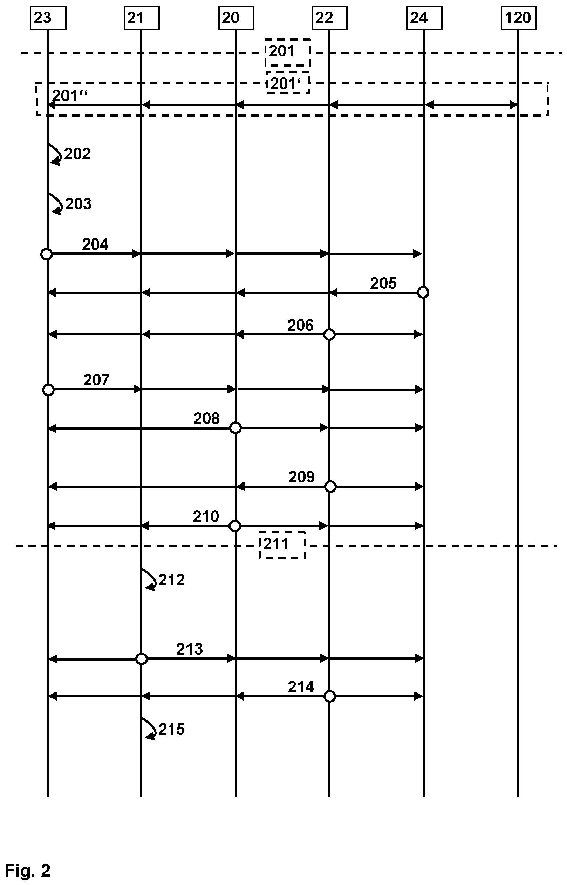

In Figur 2 ist schematisch ein Kommunikationsdiagramm dargestellt, welches die Durchführung des erfindungsgemäßen Verfahrens veranschaulicht. Das Kommunikationsdiagramm zeigt hierbei die Kommunikation zwischen dem ersten Kommunikationsteilnehmer 20, dem zweiten Kommunikationsteilnehmer 21, dem dritten Kommunikationsteilnehmer 22, dem vierten Kommunikationsteilnehmer 23, dem fünften Kommunikationsteilnehmer 24 sowie einer Anwendungs-Server-Entität 120, insbesondere für eine V2X-Anwendung, vehicle-to-x-application. In einem ersten Prozessschritt 201 ist es zunächst erforderlich, die Grundlagen bzw. Grundvoraussetzungen zu schaffen, damit die Kommunikation der Kommunikationsteilnehmer 20, 21, 22, 23, 24 untereinander sowie mit der Anwendungs-Server-Entität 120 erfolgen kann. Hierbei ist es im ersten Prozessschritt 201 oder als Teil des ersten Prozessschrittes 201 vorgesehen, dass eine Registrierung 201' der Kommunikationsteilnehmer 20, 21, 22, 23, 24 für die V2X-Anwendung bei der Anwendungs-Server-Entität 120 erfolgt. Hierzu werden insbesondere eine Mehrzahl an Nachrichten 201" zwischen den Kommunikationsteilnehmer 20, 21, 22, 23, 24 und der Anwendungs-Server-Entität 120 ausgetauscht. Diese Schaffung der Voraussetzungen für die Kommunikation der Kommunikationsteilnehmer 20, 21, 22, 23, 24 untereinander erfolgt erfindungsgemäß gemäß bekannten Verfahren, insbesondere gemäß standardisierten Verfahren. Insbesondere ist es erfindungsgemäß bevorzugt (jedoch nicht zwingend notwendig), dass eine Dienste-Kennungsinformation, welche insbesondere spezifisch für die V2X-Anwendung ist, an die Kommunikationsteilnehmer 20, 21, 22, 23, 24 übermittelt wird.

In einem zweiten Prozessschritt 202 wird die V2X-Anwendung gestartet. Dies bedeutet, dass eine Kommunikations-Session (bzw. eine Nachrichten-Session) von einem der Kommunikationsteilnehmer 20, 21, 22, 23, 24 gestartet bzw. initiiert wird. Im in Figur 2 dargestellten Beispiel initiiert der vierte Kommunikationsteilnehmer 23 die Nachrichten-Session. Dies ist jedoch lediglich ein Beispiel; die Nachrichten-Session könnte prinzipiell von jedem der Kommunikationsteilnehmer 20, 21, 22, 23, 24 eingeleitet oder initiiert werden. In einem dritten Prozessschritt 203 wird eine Sessions-Kennungsinformation (Session ID, SID) durch denjenigen Kommunikationsteilnehmer generiert, welcher die Nachrichten-Session initiiert (im in Figur 2 dargestellten Beispielszenario der vierter Kommunikationsteilnehmer 23). Aufgrund der Registrierung der Kommunikationsteilnehmer 20, 21, 22, 23, 24 im oder während des ersten Prozessschrittes 201 bei der Anwendungs-Server-Entität 120 für insbesondere die V2X-Anwendung ist es nunmehr möglich, dass die verschiedenen Kommunikationsteilnehmer 20, 21, 22, 23, 24 Broadcast-Nachrichten austauschen. Beispiele für solche Broadcast-Nachrichten sind in einem vierten Prozessschritt 204, einem fünften Prozessschritt 205 und einem sechsten Prozessschritt 206 schematisch und beispielhaft in Figur 2 dargestellt: Im vierten Prozessschritt 204 sendet der vierte Kommunikationsteilnehmer 23 in dessen Funkabdeckungsbereich bzw. dessen Sendereichweite die erste Broadcast-Nachricht der Nachrichten-Session; diese erste Broadcast-Nachricht wird - da sich die anderen Kommunikationsteilnehmer 20, 21, 22, 24 der Gruppe von Kommunikationsteilnehmern im Funkabdeckungsbereich des vierten Kommunikationsteilnehmers 23 befinden - von den anderen Kommunikationsteilnehmern auch empfangen. Die erste Broadcast-Nachricht umfasst insbesondere die Dienste-Kennungsinformation, die Sessions-Kennungsinformation, eine Sequenzinformation der ersten Broadcast-Nachricht, eine Indikation, von welchem Kommunikationsteilnehmer die Broadcast-Nachricht gesendet wurde (im vorliegenden Fall der vierte Kommunikationsteilnehmer 23), sowie einen ersten Nachrichteninhalt. Im fünften Prozessschritt 205 sendet beispielhaft der fünfte Kommunikationsteilnehmer 24 in dessen Funkabdeckungsbereich bzw. dessen Sendereichweite die zweite Broadcast-Nachricht der Nachrichten-Session; diese zweite Broadcast-Nachricht wird wiederum - da sich die anderen Kommunikationsteilnehmer 20, 21, 22, 23 der Gruppe von Kommunikationsteilnehmern im Funkabdeckungsbereich des fünften Kommunikationsteilnehmers 24 befinden - von den anderen Kommunikationsteilnehmern auch empfangen. Die zweite Broadcast-Nachricht umfasst insbesondere wiederum die Dienste-Kennungsinformation, die Sessions-Kennungsinformation, eine Sequenzinformation der zweiten Broadcast-Nachricht, eine Indikation, von welchem Kommunikationsteilnehmer die Broadcast-Nachricht gesendet wurde (im vorliegenden Fall der fünfte Kommunikationsteilnehmer 24), sowie einen zweiten Nachrichteninhalt. Im sechsten Prozessschritt 206 sendet beispielhaft der dritte Kommunikationsteilnehmer 22 in dessen Funkabdeckungsbereich bzw. dessen Sendereichweite die dritte Broadcast-Nachricht der Nachrichten-Session; diese dritte Broadcast-Nachricht wird wiederum - da sich die anderen Kommunikationsteilnehmer 20, 21, 23, 24 der Gruppe von Kommunikationsteilnehmern im Funkabdeckungsbereich des dritten Kommunikationsteilnehmers 22 befinden - von den anderen Kommunikationsteilnehmern auch empfangen. Die dritte Broadcast-Nachricht umfasst insbesondere wiederum die Dienste-Kennungsinformation, die Sessions-Kennungsinformation, eine Sequenzinformation der dritten Broadcast-Nachricht, eine Indikation, von welchem Kommunikationsteilnehmer die Broadcast-Nachricht gesendet wurde (im vorliegenden Fall der dritte Kommunikationsteilnehmer 22), sowie einen dritten Nachrichteninhalt.

Die erste, zweite und dritte Broadcast-Nachricht (der vierten, fünften und sechsten Prozessschritte 204, 205 und 206) sind Teil der Nachrichten-Session und weisen die jeweilige Sequenzinformation derart auf, dass insbesondere die Sequenzinformationen von aufeinanderfolgenden Broadcast-Nachrichten innerhalb der Nachrichten-Session erhöht sind, insbesondere um eine Zähleinheit erhöht sind. Basierend auf den Sequenzinformationen ist es somit für alle Kommunikationsteilnehmer 20, 21, 22, 23, 24 möglich festzustellen, ob die Sequenz an Broadcast-Nachrichten der Nachrichten-Session vollständig ist.

Alle Broadcast-Nachrichten der Nachrichten-Session umfassen - neben der Sequenzinformation - insbesondere die Dienste-Kennungsinformation, die Sessions-Kennungsinformation, eine Indikation, von welchem Kommunikationsteilnehmer die Broadcast-Nachricht gesendet wurde, sowie einen entsprechenden Nachrichteninhalt.

Figur 2 zeigt im siebten, achten, neunten und zehnten Prozessschritt 207, 208, 209, 210 beispielhaft eine Situation auf, bei der der zweite Kommunikationsteilnehmer 21 (bzw. der betrachtete spezifische Empfänger 21) wenigstens eine Broadcast-Nachricht der Nachrichten-Session, welche vom ersten Kommunikationsteilnehmer 20 (welcher auch als Sender 20 bezeichnet wird) nicht empfängt: Im siebten Prozessschritt 207 sendet zunächst (beispielhaft) der vierte Kommunikationsteilnehmer 23 in dessen Funkabdeckungsbereich bzw. dessen Sendereichweite die letzte vom spezifischen Empfänger 21 noch empfangene Broadcast-Nachricht der Nachrichten-Session; diese letzte noch (vom spezifischen Empfänger 21) empfangene Broadcast-Nachricht wird - da sich die anderen Kommunikationsteilnehmer 20, 21, 22, 24 der Gruppe von Kommunikationsteilnehmern im Funkabdeckungsbereich des vierten Kommunikationsteilnehmers 23 befinden - von den anderen Kommunikationsteilnehmern auch empfangen. Die Sequenzinformation der letzten vom spezifischen Empfänger 21 noch empfangenen Broadcast-Nachricht wird nachfolgend auch mit der Sequenzinformation lastSeq bezeichnet.

Im achten Prozessschritt 208 sendet der erste Kommunikationsteilnehmer 20 (bzw. Sender 20) in dessen Funkabdeckungsbereich 20' bzw. dessen Sendereichweite die nachfolgende Broadcast-Nachricht der Nachrichten-Session (d.h. die der letzten vom spezifischen Empfänger 21 noch empfangene Broadcast-Nachricht nachfolgende Broadcast-Nachricht, welche die Sequenzinformation der der letzten vom spezifischen Empfänger 21 noch empfangenen Broadcast-Nachricht nachfolgenden Broadcast-Nachricht umfasst, nachfolgend auch als Sequenzinformation lastSeq+1 bezeichnet); diese nachfolgende Broadcast-Nachricht wird vom spezifischen Empfänger 21 (zunächst) nicht empfangen, jedoch im dargestellten Beispiel von den anderen Kommunikationsteilnehmern 22, 23, 24 der Gruppe von Kommunikationsteilnehmern.

Im zehnten Prozessschritt 210 sendet der erste Kommunikationsteilnehmer 20 (bzw. Sender 20) in dessen Funkabdeckungsbereich 20' bzw. dessen Sendereichweite eine Broadcast-Nachricht, die vom spezifischen Empfänger 21 (und von den anderen Kommunikationsteilnehmern 22, 23, 24 der Gruppe von Kommunikationsteilnehmern) empfangen wird. Bei dieser Broadcast-Nachricht handelt es sich beispielhaft um die aktuell vom spezifischen Empfänger 21 empfangene Broadcast-Nachricht (der Nachrichten-Session). Aus der Sequenzinformation dieser Broadcast-Nachricht im Vergleich zur Sequenzinformation lastSeq der letzten vom spezifischen Empfänger 21 noch empfangenen Broadcast-Nachricht (im siebten Prozessschritt 207) ist der spezifische Empfänger 21 in der Lage zu erkennen, dass die Sequenz an empfangenen Broadcast-Nachrichten der Nachrichten-Session nicht vollständig ist. Die Sequenzinformation der aktuell vom spezifischen Empfänger 21 empfangenen Broadcast-Nachricht wird nachfolgend auch als Sequenzinformation curSeq bezeichnet. In Figur 2 ist beispielhaft der Fall dargestellt, dass nicht nur eine Broadcast-Nachricht vom spezifischen Empfänger 21 nicht empfangen wird (d.h. lediglich die Broadcast-Nachricht des achten Prozessschrittes 208, d.h. mit der Sequenzinformation lastSeq+1), sondern dass es erfindungsgemäß auch möglich ist, dass mehrere (insbesondere aufeinanderfolgende) Broadcast-Nachrichten vom spezifischen Empfänger 21 nicht empfangen werden; dies ist in Figur 2 anhand einer im neunten Prozessschritt 209 vom beispielhaft dritten Kommunikationsteilnehmer 22 gesendeten Broadcast-Nachricht dargestellt, welche ebenfalls nicht vom spezifischen Empfänger 21 (jedoch von den anderen Kommunikationsteilnehmern 20, 23, 24 der Gruppe von Kommunikationsteilnehmern) empfangen wird und eine Sequenzinformation trägt bzw. umfasst, die nachfolgend auch als mit curSeq-1 bezeichnet wird.

In einem insgesamt als elfter Prozessschritt 211 bezeichneten Teil der Darstellung in Figur 2 ist es somit dem spezifischen Empfänger 21 zunächst möglich zu erkennen oder zu detektieren (im Beispiel insbesondere weil in der Nachricht des Prozessschrittes 210 vom spezifischen Empfänger 21 erkannt worden ist, dass die Nachrichten der Prozessschritte 208 und 209 verpasst wurden), dass Broadcast-Nachrichten verpasst wurden und ferner auch die Schritte des erfindungsgemäßen Verfahrens zu veranlassen bzw. zu triggern: In einem zwölften Prozessschritt 212 wird zunächst erkannt bzw. detektiert, dass wenigstens eine Broadcast-Nachricht verpasst wurde (d.h. der spezifische Empfänger 21 erkennt hierbei insbesondere - entsprechend dem ersten Schritt des erfindungsgemäßen Verfahrens - das Scheitern des Empfangs des Nachrichteninhalts der wenigstens einen Broadcast-Nachricht, insbesondere anhand eines Vergleichs der Sequenzinformationen der empfangenen Broadcast-Nachrichten, d.h. anhand des Vergleichs der Sequenzinformationen curSeq und lastSeq).

In einem dreizehnten Prozessschritt 213 sendet - entsprechend dem zweiten Schritt des erfindungsgemäßen Verfahrens - der spezifische Empfänger 21 mittels einer weiteren Broadcast-Nachricht (d.h. die auf die wenigstens eine Broadcast-Nachricht, deren Empfang durch den spezifischen Empfänger scheitert, folgt) eine Sendeaufforderung zur erneuten Übertragung des Nachrichteninhalts bzw. zur Übertragung der wenigstens einen verpassten Broadcast-Nachricht (oder aber der Mehrzahl an verpassten Broadcast-Nachrichten).

In einem vierzehnten Prozessschritt 214 sendet - entsprechend dem dritten Schritt des erfindungsgemäßen Verfahrens - einer der Mehrzahl von Kommunikationsteilnehmern der Gruppe von Kommunikationsteilnehmern 20, 21, 22, 23, 24 den Nachrichteninhalt zum spezifischen Empfänger 21 (in Form einer Broadcast-Nachricht). Im in Figur 2 dargestellten beispielhaften Ablauf ist es der dritte Kommunikationsteilnehmer 22, welcher den Nachrichteninhalt bzw. die wenigstens eine verpasste Broadcast-Nachricht (oder aber die Mehrzahl an verpassten Broadcast-Nachrichten) aussendet; es könnte jedoch auch einer der anderen Kommunikationsteilnehmer 20, 23, 24 im vierzehnten Prozessschritt 214 den Nachrichteninhalt bzw. die wenigstens eine verpasste Broadcast-Nachricht (oder aber die Mehrzahl an verpassten Broadcast-Nachrichten) senden, insbesondere beispielsweise der erste Kommunikationsteilnehmer 20 (bzw. Sender 20). Die im vierzehnten Prozessschritt 214 ausgesendete Broadcast-Nachricht umfasst - neben der Sequenzinformation, der Dienste-Kennungsinformation, der Sessions-Kennungsinformation, die Indikation, von welchem Kommunikationsteilnehmer die Broadcast-Nachricht gesendet wurde, sowie den entsprechenden Nachrichteninhalt - zusätzlich auch eine Information über den intendierten Empfänger der Broadcast-Nachricht, d.h. vorliegend der spezifische Empfänger 21.

In einem fünfzehnten Prozessschritt 215 empfängt der spezifische Empfänger 21 den Nachrichteninhalt bzw. die wenigstens eine verpasste Broadcast-Nachricht (oder aber die Mehrzahl an verpassten Broadcast-Nachrichten), so dass die Nachrichten-Session beim spezifischen Empfänger nunmehr vollständig vorliegt.

Die im dreizehnten Prozessschritt 213 und im vierzehnten Prozessschritt 214 ausgesendeten Broadcast-Nachrichten werden in der Regel zum Empfang bei allen Kommunikationsteilnehmern der Gruppe von Kommunikationsteilnehmer ausgesandt. Dadurch ist es erfindungsgemäß möglich sicherzustellen, dass nach dem dreizehnten Prozessschritt 213 tatsächlich dem spezifischen Empfänger 21 der Nachrichteninhalt bzw. die verpasste Nachricht zugeht, ohne eine übermäßig große Anzahl von Broadcast-Nachrichten mehrfach auszusenden. Erfindungsgemäß ist es insbesondere vorgesehen, dass innerhalb eines ersten Zeitintervalls nach dem Senden - während des zweiten Schritts - der weiteren Broadcast-Nachricht ein bestimmter Kommunikationsteilnehmer (etwa der Sender 20) den Nachrichteninhalt sendet und dass innerhalb eines zweiten Zeitintervalls nach dem Senden der weitere n Broadcast-Nachricht ein bestimmter anderer Kommunikationsteilnehmer (etwa derjenige Kommunikationsteilnehmer, welcher die zuvor ausgesandte Broadcast-Nachricht gesendet hatte) den Nachrichteninhalt an den spezifischen Empfänger 21 sendet. Dies ist in Figur 2 angedeutet: Nicht der Sender 20 sendet die Broadcast-Nachricht des vierzehnten Prozessschrittes aus, sondern der dritte Kommunikationsteilnehmer 22 - dies insbesondere deshalb, weil der Sender 20 innerhalb des ersten Zeitintervalls nach dem Senden der weiteren Broadcast-Nachricht (des dreizehnten Prozessschritts 213) keine Broadcast-Nachricht aussendet.

Erfindungsgemäß ist es somit vorgesehen, dass die Nachrichten der V2X-Session (d.h. der Nachrichten-Session) bei den an der Nachrichten-Session teilnehmenden Kommunikationsteilnehmer (bzw. Verkehrsteilnehmern) 20, 21, 22, 23, 24 zwischen-gespeichert werden. Die Kommunikationsteilnehmer 20, 21, 22, 23, 24 können ermitteln, ob und ggf. welche Nachrichten sie verpasst haben. Hierdurch wird sichergestellt, dass wirklich nur die verpassten Nachrichten erneut gesendet werden. Da es sich um Broadcast-Nachrichten bzw. Multicast-Nachrichten handelt, könnte es ansonsten vorkommen, dass die entsprechenden V2X-Frequenzbänder in der Umgebung mit V2X-Nachrichten überlastet werden.

Mit dem erfindungsgemäßen Verfahren sind die Kommunikationsteilnehmer (oder Verkehrsteilnehmer) 20, 21, 22, 23, 24 in der Lage eine Anfrage an die anderen Session-Teilnehmer stellen (dreizehnter Prozessschritt 213, zweiter Schritt), welche Nachrichten sie verpasst haben, und um eine erneute Versendung der Nachrichten bitten. Insbesondere kann erfindungsgemäß sichergestellt werden, dass nur einer der Teilnehmer der Gruppe von Kommunikationsteilnehmern (bzw. jedenfalls eine minimale oder kleine Anzahl der Session-Teilnehmer) die Nachrichten nochmals versendet. Damit wird sichergestellt, dass nicht alle Kommunikationsteilnehmer 20, 21, 22, 23, 24 die verpassten Nachrichten (redundant) versenden. Da es sich um Broadcast-Nachrichten bzw. Multicast-Nachrichten handelt, könnte es ansonsten vorkommen, dass die entsprechenden V2X-Frequenzbänder in der Umgebung mit V2X-Nachrichten überlastet werden.

Erfindungsgemäß ist es wie erwähnt vorgesehen, dass die Nachrichten der V2X-Session (d.h. der Nachrichten-Session) bei den an der Nachrichten-Session teilnehmenden Kommunikationsteilnehmer (bzw. Verkehrsteilnehmern) 20, 21, 22, 23, 24 bzw. bei zumindest einem Kommunikationsteilnehmer 20, 21, 22, 23, 24 zwischen-gespeichert werden. Gegenüber einer Zwischenspeicherung jeder ausgetauschten Broadcast-Nachricht bei jedem der Kommunikationsteilnehmer 20, 21, 22, 23, 24 (so wie dies im Zusammenhang mit dem Ausführungsbeispiel gemäß Figur 2 beispielhaft realisiert ist) ist es gemäß einer alternativen Ausführungsform der vorliegenden Erfindung vorgesehen, dass die V2X-Nachrichten (bzw. Broadcast-Nachrichten) der Nachrichten-Session bei einem der Kommunikationsteilnehmer gespeichert werden.

Erfindungsgemäß ist es insbesondere vorgesehen, um den V2X-Anwendungsfall bzw. die V2X-Anwendung und die entsprechende Nachrichten-Session zu identifizieren, eine "Service-ID" (ServID) bzw. Dienste-Kennungsinformation genannt zu verwenden, die die V2X-Anwendung identifiziert. Ferner wird erfindungsgemäß bevorzugt die Sessions-Kennungsinformation (Session-ID, SID) definiert:
Die Dienste-Kennungsinformation kann beispielsweise eine im V2X-Standard vorgesehene Kennung bzw. Information (bzw. ein identifier) für einen bestimmten Anwendungsfall (use case) sein, aber auch eine Kennung oder Information bzw. ein identifier für einen Dienst (Service) und/oder eine Anwendung eines Dienstanbieters für spezifische V2X-Anwendungen.

Die Sessions-Kennungsinformation (Session-ID) wird erfindungsgemäß in aller Regel durch denjenigen Kommunikationsteilnehmer oder Verkehrsteilnehmer generiert, welcher die erste Nachricht (bzw. Broadcast-Nachricht) innerhalb der Nachrichten-Session sendet bzw. die V2X-Kommunikation für einen V2X-Anwendungsfall / eine V2X-Anwendung initiiert.

Üblicherweise ist es so, dass die Einführung von Sequenznummern (für die Broadcast-Nachricht der Nachrichten-Session) sich für die V2X-Kommunikation über Broad-/Multicast-Nachrichten als schwierig gestaltet, da sich die Antworten (bzw. beispielsweise zwei Broadcast-Nachrichten) zeitlich überscheiden können und es damit vorkommen kann, dass Sequenznummern u.U. nicht eindeutig sind. Aus diesem Grund ist es erfindungsgemäß vorgesehen, dass als "Sequenznummer" (bzw. als Sequenzinformation) die Kombination aus einer eindeutigen Kennung (bzw. einem Identifier) des (sendenden) Verkehrsteilnehmers bzw. Kommunikationsteilnehmers (VT-ID) für die V2X-Anwendung und sowie einer aufsteigenden Sequenznummer (Seq) herangezogen wird. Hierbei ist es erfindungsgemäß alternativ möglich und bevorzugt, dass die VT-ID (d.h. eine Kennung oder ein identifier des Kommunikationsteilnehmers oder Verkehrsteilnehmers) innerhalb der V2X-Anwendung oder alternativ auch eine für die V2X-Session (d.h. die Nachrichten-Session) vom Sender selbst vergebene ID (bzw. Kennung oder identifier) ist. Die Sequenznummer Seq wird vom Kommunikationsteilnehmer bzw. Verkehrsteilnehmer, der die erste Broadcast-Nachricht der Nachrichten-Session sendet, auf beispielsweise "1" (bzw. auch "0" oder auch "10") gesetzt. Jeder weitere Sender inkrementiert die höchste empfangene Sequenznummer und setzt diese als neue Seq in seine Nachricht. Sollten wegen zeitlicher Überschneidung zwei oder mehrere Nachrichten die gleiche Seq haben, erhöht der Sender die neue Seq um die Anzahl der gleichen (höchsten) Sequenznummern Seq (d.h. bei zwei empfangenen Broadcast-Nachrichten mit der gleichen (höchsten) Sequenznummer Seq trägt die darauf folgende neue (von diesem Kommunikationsteilnehmer ausgesendete) Broadcast-Nachricht eine Sequenznummer Seq +2, bei drei empfangenen Broadcast-Nachrichten mit der gleichen (höchsten) Sequenznummer Seq trägt die darauf folgende neue (von diesem Kommunikationsteilnehmer ausgesendete) Broadcast-Nachricht eine Sequenznummer Seq +3, etc.). Bei der Verwendung bzw. der Definition der Sequenzinformation dergestalt, dass zusätzlich zur Sequenznummer Seq auch noch die Sender-Kennung (VT-ID), d.h. die Kennung bzw. der identifier des sendenden Kommunikationsteilnehmers bzw. Verkehrsteilnehmers, verwendet wird, können auch die Broadcast-Nachrichten mit gleicher Sequenznummer Seq unterschieden werden. Dies bedeutet auch, dass es dann die Sequenznummer(n) "Seq+1" (wenn es zweimal "Seq" gibt), "Seq+1" und "Seq+2" (wenn es dreimal "Seq" gibt) usw., nicht gibt bzw. vorkommt.

Erfindungsgemäß wird bevorzugt insbesondere vorausgesetzt, dass die teilnehmenden Kommunikationsteilnehmer 20, 21, 22, 23, 24 oder Verkehrsteilnehmer in einem den Anwendungsfall (Use Case) abdeckenden intelligenten Transportsystem (Intelligent Transport System, ITS) bzw. bei dem V2X-Service / der V2X-Anwendung des Diensteanbieters (bzw. bei der Anwendungs-Server-Entität 120) registriert sind und insbesondere etwaige notwenige Sicherheitsmechanismen, wie z.B. Signierung mit pseudonymisierten Zertifikaten etc., unterstützen.

Insbesondere ist es gemäß der vorliegenden Erfindung vorgesehen, dass alle an der Nachrichten-Session teilnehmenden Kommunikationsteilnehmer oder VT 20, 21, 22, 23, 24 alle V2X-Nachrichten der Session, d.h. alle Broadcast-Nachrichten, speichern, die sie empfangen haben.

Zum Start einer V2X-Session (bzw. einer Nachrichten-Session) wird von einem der Kommunikationsteilnehmer (im Beispiel der Figur 2 ist dies der vierte Kommunikationsteilnehmer 23; es könnte jedoch auch jeder andere Kommunikationsteilnehmer 20, 21, 22, 24 sein) die V2X-Session für eine bestimmte V2X-Anwendung (d.h. mit einer ServID, Dienste-Kennungsinformation) gestartet und eine Session-ID (Sessions-Kennungsinformation) erzeugt. Die initiale V2X-Nachricht oder Broadcast-Nachricht enthält dann insbesondere die ServID, die SID, Seq=1, Sender-ID (Sender-Kennung des vierten Kommunikationsteilnehmers 23) und den Inhalt der Nachricht. Im Folgenden sind alle Kommunikationsteilnehmer in der Lage, an der Nachrichten-Session teilzunehmen, da sie für die V2X-Anwendung registriert sind sowie sich in der Empfangsumgebung des jeweiligen Senders befinden; sie können somit entsprechende Broadcast-Nachrichten (d.h. insbesondere mit ServID, SID, Seq, ihrer VT-ID und einem Inhalt) senden. Die an der V2X-Session teilnehmenden Kommunikationsteilnehmer bzw. Verkehrsteilnehmer (VT) speichern insbesondere alle V2X-Nachrichten, die sie empfangen, ab.

Falls ein Kommunikationsteilnehmer oder VT (im Beispiel der zweite Kommunikationsteilnehmer 21 bzw. der spezifische Empfänger 21), der an der V2X-Session (SID) der V2X-Anwendung (ServID) teilnimmt, eine V2X-Nachricht der Session empfängt, deren Sequenznummer curSeq um mindestens 2 (bzw. zwei Erhöhungseinheiten) höher ist als die Sequenznummer der zuletzt empfangenden Nachricht lastSeq, wird erkannt, dass der Empfang einer Broadcast-Nachricht bzw. eines damit verbundenen Nachrichteninhalts verpasst wurde bzw. scheiterte.

Der spezifische Empfänger 21 sendet daraufhin eine V2X-Nachricht (Broadcast-Nachricht) mit der Anfrage zum erneuten Versand der verpassten Nachrichten mit curSeq und lastSeq; insbesondere ist es erfindungsgemäß bevorzugt, dass diese Nachricht (bzw. Sendeaufforderung) nicht Teil der Nachrichten-Session ist und nicht von den Kommunikationsteilnehmern bzw. VT gespeichert wird.

Beispielsweise derjenige Verkehrsteilnehmer, welcher die Nachricht curSeq gesendet hat (d.h. der Sender 20 bzw. erste Kommunikationsteilnehmer 20), sendet fehlende Nachrichten "lastSeq+1" bis "curSeq-1" innerhalb eines (ersten) vorgegebenen Zeitintervalls von Δt (welches insbesondere für die betreffende V2X-Anwendung definiert ist) in einer weiteren Broadcast-Nachricht, in welcher insbesondere der Empfänger (d.h. der spezifische Empfänger 21) explizit angegeben ist.

Erfindungsgemäß ist es insbesondere vorgesehen, dass - falls der Sender 20 (d.h. der Kommunikationsteilnehmer, welcher die Nachricht mit der Session-ID "curSeq-1" gesendet hat) innerhalb des (ersten) vorgegebenen Zeitintervalls von Δt die verpassten Nachrichten (noch) nicht gesendet hat - ein anderer Kommunikationsteilnehmer, beispielsweise der dritte Kommunikationsteilnehmer 22, die vom spezifischen Empfänger 21 verpassten Nachrichten innerhalb eines weiteren (zweiten) vorgegebenen Zeitintervalls von Δt sendet; diese Nachricht mit den verpassten Nachrichten ist erfindungsgemäß insbesondere nicht Teil der Nachrichten-Session und wird nicht von den Kommunikationsteilnehmer bzw. VT gespeichert. Entsprechend geht es weiter bis einer der Kommunikationsteilnehmer bzw. VT die Nachrichten sendet.

In der Nachrichten-Session kann es vorkommen, dass es zu einer möglichen Sequenznummer "noSeq" keine Nachricht bzw. Broadcast-Nachricht gibt. Dies ist dann der Fall, wenn es davor, wie oben dargestellt, doppelte Sequenznummern gibt. Dann senden die Kommunikationsteilnehmer bzw. VT, welche die Nachrichten mit "noSeq-1" gesendet haben, ggf. beide die verpassten Nachrichten. Entsprechend bei drei, vier, oder mehreren gleichen Sequenznummern.

Erfindungsgemäß wird insbesondere davon ausgegangen, dass die Kommunikationsteilnehmer bzw. VT, die zuletzt Nachrichten in der Nachrichten-Session gesendet haben, am ehesten noch in der Session sind und damit die verpassten Nachrichten senden können. Alternativ hierzu (d.h. dass die VT, die zuletzt eine Nachricht in der Session gesendet haben, die verpassten Nachrichten senden) kann es jedoch erfindungsgemäß ebenfalls vorteilhaft vorgesehen sein, dass die ersten Kommunikationsteilnehmer, welche eine Broadcast-Nachricht in der Nachrichten-Session gesendet haben, die verpassten Nachrichten senden: Nach der Anfrage über verpasste Nachrichten (des spezifischen Empfängers 21), hat zuerst der erste Sender (Initiator der Session) eine vordefinierte Zeitspanne Zeit, die verpassten Nachrichten zu senden. Geschieht dies nicht, hat der Sender der zweiten Nachricht wieder die Zeitspanne Zeit, und so weiter. Diese Option eignet sich insbesondere für Anwendungsfälle oder Use Cases, bei denen der Initiator und Sender der ersten Nachricht sowie die Sender der darauffolgenden Nachrichten am wahrscheinlichsten noch in der Nachrichten-Session sind (d.h. insbesondere sich im Funkabdeckungsbereich der Kommunikation befinden), da diese z.B. eine besondere Bedeutung / Rolle haben.

Alternativ hierzu ist es erfindungsgemäß ebenfalls bevorzugt möglich, dass lediglich der Initiator der Nachrichten-Session (d.h. der Kommunikationsteilnehmer, welcher die erste Broadcast-Nachricht sendet) alle Nachrichten speichert und derjenige ist, der verpasste Nachrichten nochmals versendet. Sollte der Initiator und erste Sender einer Nachricht eine exponierte Rolle in der Session haben (d.h. falls er beispielsweise die Session initiiert, verwaltet und auch beendet), reicht es, wenn nur dieser alle Nachrichten speichert. Stellt dann ein Kommunikationsteilnehmer bzw. VT die Anfrage nach verpassten Nachrichten, versendet der Initiator der Session die verpassten Nachrichten. Alle anderen VT brauchen dann nichts zu speichern.

Ein Spezialfall ergibt sich dann, wenn ein Kommunikationsteilnehmer bzw. ein VT neu in eine laufende Nachrichten-Session kommt bzw. eintritt (von diesem wird dann eine Broadcast-Nachricht mit Seq > 1als erste Nachricht der Nachrichten-Session empfangen). Der Ablauf ist identisch zu dem Fall, dass ein Kommunikationsteilnehmer (beispielsweise der spezifische Empfänger 21) eine Nachricht verpasst hat, nur dass als letzte empfangende Nachricht lastSeq= 0 angegeben wird (und somit alle der ersten empfangenen Nachricht (mit Seq>1) vorausgehenden gesendeten Nachrichten nachgeliefert werden).

Wenn ein Kommunikationsteilnehmer bzw. VT die Nachrichten-Session verlassen möchte, ist es insbesondere bevorzugt, dass die gespeicherten Nachrichten der Session gelöscht werden. Auch ist es erfindungsgemäß bevorzugt vorgesehen, dass eine Zeit definiert ist, nach welcher ein VT die Session für beendet hält, d.h. in der er keine neuen Nachrichten empfängt. Auch in diesem Fall löscht der VT dann alle gespeicherten Nachrichten.

## Patentansprüche

1. Verfahren zum Übermitteln eines Nachrichteninhalts mittels einer Mehrzahl von Broadcast-Nachrichten, wobei die Übermittlung des Nachrichteninhalts zwischen einer Mehrzahl von Kommunikationsteilnehmern einer Gruppe von Kommunikationsteilnehmern (20, 21, 22, 23, 24) erfolgt, wobei eine Mehrzahl an Broadcast-Nachrichten zwischen den Kommunikationsteilnehmern der Gruppe von Kommunikationsteilnehmern (20, 21, 22, 23, 24) gesendet und empfangen werden, wobei die Mehrzahl dieser Broadcast-Nachrichten Teil einer Nachrichten-Session von Broadcast-Nachrichten ist, wobei jede Broadcast-Nachricht der Nachrichten-Session eine Sequenzinformation aufweist und jeder Kommunikationsteilnehmer zum Senden einer Broadcast-Nachricht deren, eine Sequenznummer enthaltende Sequenzinformation so setzt, das deren Sequenznummer gegenüber der höchsten, durch den Kommunikationsteilnehmer empfangenen Sequenznummer erhöht ist, wobei ein Sender (20) wenigstens eine Broadcast-Nachricht sendet, wobei der Nachrichteninhalt von dem Sender (20) an eine Mehrzahl von Empfängern (21, 22, 23, 24) der Gruppe von Kommunikationsteilnehmern (20, 21, 22, 23, 24) mittels der wenigstens einen Broadcast-Nachricht mittels einer PC5-Sidelink Funktionalität, insbesondere unter Nutzung der Mode-4-Funktionalität, gesendet wird, wobei das Verfahren zum Übermitteln des Nachrichteninhalts für den Fall, dass der Empfang des Nachrichteninhalts mittels der wenigstens einen Broadcast-Nachricht durch einen spezifischen Empfänger (21) der Mehrzahl von Empfängern (21, 22, 23, 24) scheitert, die nachfolgenden Schritte umfasst:
-- in einem ersten Schritt erkennt der spezifische Empfänger (21) das Scheitern des Empfangs des Nachrichteninhalts mittels der wenigstens einen Broadcast-Nachricht, wobei die Erkennung des Scheiterns des Empfangs des Nachrichteninhalts basierend auf einer Sequenzinformation einer durch den spezifischen Empfänger (21) empfangenen und der wenigstens einen Broadcast-Nachricht nachfolgenden Broadcast-Nachricht erfolgt, wobei eine solche Erkennung durch Vergleich mit einer Sequenzinformation einer ebenfalls durch den spezifischen Empfänger (21) empfangenen und der wenigstens einen Broadcast-Nachricht vorausgehenden Broadcast-Nachricht erfolgt,
-- in einem dem ersten Schritt nachfolgenden zweiten Schritt sendet der spezifische Empfänger (21) mittels einer weiteren Broadcast-Nachricht eine Sendeaufforderung zur erneuten Übertragung des Nachrichteninhalts,
-- in einem dem zweiten Schritt nachfolgenden dritten Schritt sendet einer der Mehrzahl von Kommunikationsteilnehmern der Gruppe von Kommunikationsteilnehmern (20, 21, 22, 23, 24) den Nachrichteninhalt zum spezifischen Empfänger (21).

2. Verfahren nach Anspruch 1, **dadurch gekennzeichnet, dass** während des dritten Schritts der Nachrichteninhalt mittels einer Nachricht gesendet wird, in welcher der spezifische Empfänger (21) explizit als Empfänger benannt ist.

3. Verfahren nach einem der vorhergehenden Ansprüche, **dadurch gekennzeichnet, dass** während des dritten Schritts der Nachrichteninhalt durch den Sender (20) der wenigstens einen Broadcast-Nachricht an den spezifischen Empfänger (21) gesendet wird, insbesondere während eines ersten Zeitintervalls nach dem Senden - während des zweiten Schritts - der weiteren Broadcast-Nachricht durch den spezifischen Empfänger (21).

4. Verfahren nach einem der vorhergehenden Ansprüche, **dadurch gekennzeichnet, dass** während des dritten Schritts der Nachrichteninhalt durch einen vom Sender (20) verschiedenen Kommunikationsteilnehmer der Gruppe von Kommunikationsteilnehmern (20, 21, 22, 23, 24) an den spezifischen Empfänger (21) gesendet wird, insbesondere während eines zweiten Zeitintervalls nach dem Senden - während des zweiten Schritts - der weiteren Broadcast-Nachricht durch den spezifischen Empfänger (21), wobei das zweite Zeitintervall insbesondere nach Ablauf des ersten Zeitintervalls startet.

5. Verfahren nach einem der vorhergehenden Ansprüche, **dadurch gekennzeichnet, dass** als Teil der Nachrichten-Session von Broadcast-Nachrichten wenigstens eine erste Broadcast-Nachricht von einem ersten Kommunikationsteilnehmer der Gruppe von Kommunikationsteilnehmern (20, 21, 22, 23, 24) ausgesendet wird und wenigstens eine zweite Broadcast-Nachricht von einem zweiten Kommunikationsteilnehmer der Gruppe von Kommunikationsteilnehmern (20, 21, 22, 23, 24) ausgesendet wird, wobei sowohl die erste Broadcast-Nachricht als auch die zweite Broadcast-Nachricht die gleiche oder gleichlautende Sequenzinformation aufweisen, wobei insbesondere eine von einem weiteren Kommunikationsteilnehmer der Gruppe von Kommunikationsteilnehmern (20, 21, 22, 23, 24) ausgesendete weitere Broadcast-Nachricht eine um zwei Zähleinheiten inkrementierte Sequenzinformation aufweist.

6. Verfahren nach einem der vorhergehenden Ansprüche, **dadurch gekennzeichnet, dass** die Nachrichten-Session von Broadcast-Nachrichten von einem spezifischen Kommunikationsteilnehmer der Gruppe von Kommunikationsteilnehmern (20, 21, 22, 23, 24) mittels einer initialen Broadcast-Nachricht gestartet oder initiiert wird, wobei während des dritten Schritts der Nachrichteninhalt durch den spezifischen Kommunikationsteilnehmer an den spezifischen Empfänger (21) gesendet wird, insbesondere während eines ersten Zeitintervalls nach dem Senden - während des zweiten Schritts - der weiteren Broadcast-Nachricht durch den spezifischen Empfänger (21),
wobei insbesondere während des dritten Schritts der Nachrichteninhalt durch einen weiteren spezifischen Kommunikationsteilnehmer an den spezifischen Empfänger (21) gesendet wird, wobei der weitere spezifische Kommunikationsteilnehmer derjenige Kommunikationsteilnehmer ist, welcher die auf die initiale Broadcast-Nachricht nachfolgende Broadcast-Nachricht gesendet hat, wobei der Nachrichteninhalt an den spezifischen Empfänger (21) insbesondere während eines zweiten Zeitintervalls nach dem Senden - während des zweiten Schritts - der weiteren Broadcast-Nachricht durch den spezifischen Empfänger (21) gesendet wird, wobei das zweite Zeitintervall insbesondere nach Ablauf des ersten Zeitintervalls startet.

7. Verfahren nach einem der vorhergehenden Ansprüche, **dadurch gekennzeichnet, dass**
-- die Broadcast-Nachrichten der Nachrichten-Session oder jedenfalls deren jeweiliger Nachrichteninhalt von den Kommunikationsteilnehmern der Gruppe von Kommunikationsteilnehmern (20, 21, 22, 23, 24) gespeichert werden,
-- oder dass die Broadcast-Nachrichten der Nachrichten-Session oder jedenfalls deren jeweiliger Nachrichteninhalt von einem, insbesondere dem spezifischen, Kommunikationsteilnehmer der Gruppe von Kommunikationsteilnehmern (20, 21, 22, 23, 24) gespeichert werden.

8. Telekommunikationsnetz (100) oder System zum Übermitteln eines Nachrichteninhalts mittels einer Mehrzahl von Broadcast-Nachrichten, umfassend eine Mehrzahl von Kommunikationsteilnehmern einer Gruppe von Kommunikationsteilnehmern (20, 21, 22, 23, 24), wobei die Übermittlung des Nachrichteninhalts zwischen der Mehrzahl von Kommunikationsteilnehmern der Gruppe von Kommunikationsteilnehmern (20, 21, 22, 23, 24) erfolgt, wobei die Kommunikationsteilnehmer dazu konfiguriert sind, eine Mehrzahl an Broadcast-Nachrichten zu senden und zu empfangen, wobei die Mehrzahl dieser Broadcast-Nachrichten Teil einer Nachrichten-Session von Broadcast-Nachrichten ist, wobei jede Broadcast-Nachricht der Nachrichten-Session eine Sequenzinformation aufweist und jeder Kommunikationsteilnehmer dazu konfiguriert ist, zum Senden einer Broadcast-Nachricht deren, eine Sequenznummer enthaltende Sequenzinformation so zu setzen, das deren Sequenznummer gegenüber der höchsten, durch den Kommunikationsteilnehmer empfangenen Sequenznummer erhöht ist, wobei ein Sender (20) wenigstens eine Broadcast-Nachricht sendet, wobei der Nachrichteninhalt von dem Sender (20) an eine Mehrzahl von Empfängern (21, 22, 23, 24) der Gruppe von Kommunikationsteilnehmern (20, 21, 22, 23, 24) mittels der wenigstens einen Broadcast-Nachricht mittels einer PC5-Sidelink Funktionalität, insbesondere unter Nutzung der Mode-4-Funktionalität, gesendet wird, wobei das Telekommunikationsnetz (100) oder das System derart konfiguriert ist, dass für den Fall, dass der Empfang des Nachrichteninhalts mittels der wenigstens einen Broadcast-Nachricht durch einen spezifischen Empfänger (21) der Mehrzahl von Empfängern (21, 22, 23, 24) scheitert,
-- der spezifische Empfänger (21) konfiguriert ist das Scheitern des Empfangs des Nachrichteninhalts mittels der wenigstens einen Broadcast-Nachricht zu erkennen, wobei der spezifische Empfänger (21) derart konfiguriert ist, dass die Erkennung des Scheiterns des Empfangs des Nachrichteninhalts basierend auf einer Sequenzinformation einer durch den spezifischen Empfänger (21) empfangenen und der wenigstens einen Broadcast-Nachricht nachfolgenden Broadcast-Nachricht erfolgt und durch Vergleich mit einer Sequenzinformation einer ebenfalls durch den spezifischen Empfänger (21) empfangenen und der wenigstens einen Broadcast-Nachricht vorausgehenden Broadcast-Nachricht erfolgt,
-- der spezifische Empfänger (21) konfiguriert ist, mittels einer weiteren Broadcast-Nachricht eine Sendeaufforderung zur erneuten Übertragung des Nachrichteninhalts zu senden,
-- einer der Mehrzahl von Kommunikationsteilnehmern der Gruppe von Kommunikationsteilnehmern (20, 21, 22, 23, 24) konfiguriert ist, den Nachrichteninhalt zum spezifischen Empfänger (21) zu senden.

9. Kommunikationsteilnehmer konfiguriert als Sender (20) oder Empfänger (21, 22, 23, 24) zur Verwendung in einem Telekommunikationsnetz (100) oder in einem System nach Anspruch 8.

10. Computerprogramm umfassend Befehle, mit deren Hilfe die Schritte eines Verfahrens nach einem der Ansprüche 1 bis 7 durchführbar sind, wenn das Computerprogramm auf einer programmierbaren Einrichtung, insbesondere auf einem Netzknoten in Form eines Senders (20) und/oder eines Empfängers (21, 22, 23, 24) und/oder eines Kommunikationsteilnehmers (20, 21, 22, 23, 24), ausgeführt wird.

11. Computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das Computerprogramm nach Anspruch 10 speichert oder überträgt oder wobei das computerlesbare Medium oder das Datenträgersignal den auf der programmierbaren Einrichtung, insbesondere einem Netzknoten in Form eines Senders (20) und/oder eines Empfängers (21, 22, 23, 24) und/oder eines Kommunikationsteilnehmers (20, 21, 22, 23, 24), auszuführenden Teil des Computerprogramms nach Anspruch 10 speichert oder überträgt.

## Claims

1. Method for transmitting a message content by means of a plurality of broadcast messages, the transmission of the message content being between a plurality of communication participants in a group of communication participants (20, 21, 22, 23, 24), a plurality of broadcast messages being sent and received between the communication participants in the group of communication participants (20, 21, 22, 23, 24), the plurality of these broadcast messages being part of a message session of broadcast messages,
wherein each broadcast message in the message session comprises sequence information, and each communication participant, to send a broadcast message, sets its sequence information, containing a sequence number, in such a way that its sequence number is increased by comparison with the highest sequence number received by the communication participant,
wherein a transmitter (20) sends at least one broadcast message, the message content being sent from the transmitter (20) to a plurality of receivers (21, 22, 23, 24) in the group of communication participants (20, 21, 22, 23, 24) by means of the at least one broadcast message by means of a PC5 sidelink functionality, in particular using mode 4 functionality,
wherein, to transmit the message content if a specific receiver (21) in the plurality of receivers (21, 22, 23, 24) fails to receive the message content by means of the at least one broadcast message, the method comprises the following steps:
- in a first step, the specific receiver (21) detects the failure to receive the message content by means of the at least one broadcast message, the failure to receive the message content being detected on the basis of sequence information of a broadcast message received by the specific receiver (21) and following after the at least one broadcast message, such detection taking place through comparison with sequence information of a broadcast message likewise received by the specific receiver (21) and preceding the at least one broadcast message,
- in a second step following after the first step, the specific receiver (21) sends, by means of a further broadcast message, a send request for repeat transmission of the message content,
- in a third step following after the second step, one of the plurality of communication participants in the group of communication participants (20, 21, 22, 23, 24) sends the message content to the specific receiver (21) .

2. Method according to claim 1, **characterised in that**, during the third step, the message content is sent by means of a message in which the specific receiver (21) is explicitly named as a receiver.

3. Method according to either of the preceding claims, **characterised in that**, during the third step, the message content is sent by the transmitter (20) of the at least one broadcast message to the specific receiver (21), in particular during a first time interval after the sending
- during the second step - of the further broadcast message by the specific receiver (21).

4. Method according to any of the preceding claims, **characterised in that**, during the third step, the message content is sent by a communication participant other than the transmitter (20) in the group of communication participants (20, 21, 22, 23, 24) to the specific receiver (21), in particular during a second time interval after the sending - during the second step - of the further broadcast message by the specific receiver (21), the second time interval starting in particular after the first time interval ends.

5. Method according to any of the preceding claims, **characterised in that**, as part of the message session of broadcast messages, at least one first broadcast message is broadcast by a first communication participant in the group of communication participants (20, 21, 22, 23, 24), and at least one second broadcast message is broadcast by a second communication participant in the group of communication participants (20, 21, 22, 23, 24), the first broadcast message and second broadcast message containing sequence information which is identical or reads identically, a further broadcast message, broadcast by a further communication participant in the group of communication participants (20, 21, 22, 23, 24), in particular containing sequence information incremented by two counting units.

6. Method according to any of the preceding claims, **characterised in that** the message session of broadcast messages is started or initiated by a specific communication participant in the group of communication participants (20, 21, 22, 23, 24) by means of an initial broadcast message, the message content, during the third step, being sent by the specific communication participant to the specific receiver (21), in particular during a first time interval after the sending - during the second step - of the further broadcast message by the specific receiver (21),
the message content, in particular during the third step, being sent by a further specific communication participant to the specific receiver (21), the further specific communication participant being the communication participant which sent the broadcast message following after the initial broadcast message, the message content being sent to the specific receiver (21) in particular during a second time interval after the sending - during the second step - of the further broadcast message by the specific receiver (21), the second time interval starting in particular after the first time interval ends.

7. Method according to any of the preceding claims, **characterised in that**
- the broadcast messages in the message session or at least the associated message contents thereof are stored by the communication participants in the group of communication participants (20, 21, 22, 23, 24),
- or **in that** the broadcast messages in the message session or at least the associated message contents thereof are stored by a, in particular the specific, communication participant in the group of communication participants (20, 21, 22, 23, 24).

8. Telecommunication network (100) or system for transmitting a message content by means of a plurality of broadcast messages, comprising a plurality of communication participants in a group of communication participants (20, 21, 22, 23, 24), the transmission of the message content being between the plurality of communication participants in the group of communication participants (20, 21, 22, 23, 24), the communication participants being configured to send and receive a plurality of broadcast messages, the plurality of these broadcast messages being part of a message session of broadcast messages,
wherein each broadcast message in the message session comprises sequence information, and each communication participant, to send a broadcast message, is configured to set its sequence information, containing a sequence number, in such a way that its sequence number is increased by comparison with the highest sequence number received by the communication participant,
wherein a transmitter (20) sends at least one broadcast message, the message content being sent from the transmitter (20) to a plurality of receivers (21, 22, 23, 24) in the group of communication participants (20, 21, 22, 23, 24) by means of the at least one broadcast message by means of a PC5 sidelink functionality, in particular using mode 4 functionality,
wherein the telecommunication network (100) or the system is configured in such a way that, if a specific receiver (21) in the plurality of receivers (21, 22, 23, 24) fails to receive the message content by means of the at least one broadcast message,
- the specific receiver (21) is configured to detect the failure to receive the message content by means of the at least one broadcast message, the specific receiver (21) being configured in such a way that the failure to receive the message content is detected on the basis of sequence information of a broadcast message received by the specific receiver (21) and following after the at least one broadcast message and through comparison with sequence information of a broadcast message likewise received by the specific receiver (21) and preceding the at least one broadcast message,
- the specific receiver (21) is configured to send, by means of a further broadcast message, a send request for repeat transmission of the message content,
- one of the plurality of communication participants in the group of communication participants (20, 21, 22, 23, 24) is configured to send the message content to the specific receiver (21).

9. Communication participant configured as a transmitter (20) or receiver (21, 22, 23, 24) for use in a telecommunication network (100) or in a system according to claim 8.

10. Computer program comprising commands by way of which the steps of a method according to any of claims 1 to 7 can be carried out when the computer program is run on a programmable device, in particular on a network node in the form of a transmitter (20) and/or receiver (21, 22, 23, 24) and/or communication participant (20, 21, 22, 23, 24).

11. Computer-readable medium provided for storing a computer program or data carrier signal provided for transmitting a computer program, the computer-readable medium or data carrier signal storing or transmitting the computer program according to claim 10, or the computer-readable medium or data carrier signal storing or transmitting the part of the computer program according to claim 10 which is to be carried out on the programmable device, in particular a network node in the form of a transmitter (20) and/or receiver (21, 22, 23, 24) and/or communication participant (20, 21, 22, 23, 24).

## Revendications

1. Procédé de transmission d'un contenu de message au moyen d'une pluralité de messages de diffusion, la transmission du contenu de message s'effectuant entre une pluralité de participants à la communication d'un groupe de participants à la communication (20, 21, 22, 23, 24), une pluralité de messages de diffusion étant envoyés et reçus entre les participants à la communication du groupe de participants à la communication (20, 21, 22, 23, 24), la pluralité de ces messages de diffusion faisant partie d'une session de messages de messages de diffusion,
dans lequel chaque message de diffusion de la session de messages présente une information de séquence et chaque participant à la communication définit, pour l'envoi d'un message de diffusion, son information de séquence contenant un numéro de séquence de telle sorte que son numéro de séquence soit augmenté par rapport au numéro de séquence le plus élevé reçu par le participant à la communication, dans lequel un émetteur (20) envoie au moins un message de diffusion, le contenu de message étant envoyé par l'émetteur (20) à une pluralité de récepteurs (21, 22, 23, 24) du groupe de participants à la communication (20, 21, 22, 23, 24) au moyen dudit au moins un message de diffusion au moyen d'une fonctionnalité sidelink PC5, en particulier en utilisant la fonctionnalité mode 4,
dans lequel le procédé de transmission du contenu de message, dans le cas où la réception du contenu de message au moyen dudit au moins un message de diffusion par un récepteur spécifique (21) de la pluralité de récepteurs (21, 22, 23, 24) échoue, comprend les étapes suivantes :
- dans une première étape, le récepteur spécifique (21) détecte l'échec de la réception du contenu de message au moyen dudit au moins un message de diffusion, la détection de l'échec de la réception du contenu de message se faisant sur la base d'une information de séquence d'un message de diffusion reçu par le récepteur spécifique (21) et suivant ledit au moins un message de diffusion, une telle détection se faisant par comparaison avec une information de séquence d'un message de diffusion également reçu par le récepteur spécifique (21) et précédant ledit au moins un message de diffusion,
- dans une deuxième étape suivant la première étape, le récepteur spécifique (21) envoie, au moyen d'un autre message de diffusion, une demande d'émission pour une nouvelle transmission du contenu de message,
- dans une troisième étape suivant la deuxième étape, l'un de la pluralité de participants à la communication du groupe de participants à la communication (20, 21, 22, 23, 24) envoie le contenu de message au récepteur spécifique (21).

2. Procédé selon la revendication 1, **caractérisé en ce que**, pendant la troisième étape, le contenu de message est envoyé au moyen d'un message dans lequel le récepteur spécifique (21) est explicitement désigné comme récepteur.

3. Procédé selon l'une des revendications précédentes, **caractérisé en ce que**, pendant la troisième étape, le contenu de message est envoyé par l'émetteur (20) dudit au moins un message de diffusion au récepteur spécifique (21), en particulier pendant un premier intervalle de temps après l'envoi - pendant la deuxième étape - de l'autre message de diffusion par le récepteur spécifique (21).

4. Procédé selon l'une des revendications précédentes, **caractérisé en ce que**, pendant la troisième étape, le contenu de message est envoyé au récepteur spécifique (21) par un participant à la communication du groupe de participants à la communication (20, 21, 22, 23, 24) différent de l'émetteur (20), en particulier pendant un deuxième intervalle de temps après l'envoi - pendant la deuxième étape - de l'autre message de diffusion par le récepteur spécifique (21), le deuxième intervalle de temps démarrant en particulier après expiration du premier intervalle de temps.

5. Procédé selon l'une des revendications précédentes, **caractérisé en ce que**, dans le cadre de la session de messages de diffusion, au moins un premier message de diffusion est émis par un premier participant à la communication du groupe de participants à la communication (20, 21, 22, 23, 24) et au moins un deuxième message de diffusion est émis par un deuxième participant à la communication du groupe de participants à la communication (20, 21, 22, 23, 24), aussi bien le premier message de diffusion que le deuxième message de diffusion présentant une même information de séquence identique ou similaire, un autre message de diffusion émis par un autre participant à la communication du groupe de participants à la communication (20, 21, 22, 23, 24) présentant en particulier une information de séquence incrémentée de deux unités de comptage.

6. Procédé selon l'une des revendications précédentes, **caractérisé en ce que** la session de messages de messages de diffusion est démarrée ou initiée par un participant à la communication spécifique du groupe de participants à la communication (20, 21, 22, 23, 24) au moyen d'un message de diffusion initial,
dans lequel, pendant la troisième étape, le contenu de message est envoyé par le participant à la communication spécifique au récepteur spécifique (21), en particulier pendant un premier intervalle de temps après l'envoi - pendant la deuxième étape - de l'autre message de diffusion par le récepteur spécifique (21),
dans lequel, en particulier pendant la troisième étape, le contenu de message est envoyé au récepteur spécifique (21) par un autre participant à la communication spécifique, l'autre participant à la communication spécifique étant le participant à la communication qui a envoyé le message de diffusion suivant le message de diffusion initial, le contenu de message étant envoyé au récepteur spécifique (21) en particulier pendant un deuxième intervalle de temps après l'envoi - pendant la deuxième étape - de l'autre message de diffusion par le récepteur spécifique (21), le deuxième intervalle de temps démarrant en particulier après expiration du premier intervalle de temps.

7. Procédé selon l'une des revendications précédentes, **caractérisé en ce que**
- les messages de diffusion de la session de messages, ou en tout cas leur contenu de message respectif, sont mémorisés par les participants à la communication du groupe de participants à la communication (20, 21, 22, 23, 24),
- ou que les messages de diffusion de la session de messages, ou en tout cas leur contenu de message respectif, sont mémorisés par un participant à la communication, en particulier le participant à la communication spécifique du groupe de participants à la communication (20, 21, 22, 23, 24).

8. Réseau de télécommunication (100) ou système de transmission d'un contenu de message au moyen d'une pluralité de messages de diffusion, comprenant une pluralité de participants à la communication d'un groupe de participants à la communication (20, 21, 22, 23, 24), la transmission du contenu de message s'effectuant entre la pluralité de participants à la communication du groupe de participants à la communication (20, 21, 22, 23, 24), les participants à la communication étant configurés pour envoyer et recevoir une pluralité de messages de diffusion, la pluralité de ces messages de diffusion faisant partie d'une session de messages de diffusion,
dans lequel chaque message de diffusion de la session de messages présente une information de séquence et chaque participant à la communication est configuré, pour envoyer un message de diffusion, pour définir son information de séquence contenant un numéro de séquence de telle sorte que son numéro de séquence soit augmenté par rapport au numéro de séquence le plus élevé reçu par le participant à la communication,
dans lequel un émetteur (20) envoie au moins un message de diffusion, le contenu de message étant envoyé par l'émetteur (20) à une pluralité de récepteurs (21, 22, 23, 24) du groupe de participants à la communication (20, 21, 22, 23, 24) au moyen dudit au moins un message de diffusion au moyen d'une fonctionnalité sidelink PC5, en particulier en utilisant la fonctionnalité mode 4,
dans lequel le réseau de télécommunication (100) ou le système est configuré de telle sorte que, dans le cas où la réception du contenu de message au moyen dudit au moins un message de diffusion par un récepteur spécifique (21) de la pluralité de récepteurs (21, 22, 23, 24) échoue,
- le récepteur spécifique (21) est configuré pour détecter l'échec de la réception du contenu de message au moyen dudit au moins un message de diffusion, le récepteur spécifique (21) étant configuré de telle sorte que la détection de l'échec de la réception du contenu de message se fasse sur la base d'une information de séquence d'un message de diffusion reçu par le récepteur spécifique (21) et suivant ledit au moins un message de diffusion, et se fasse par comparaison avec une information de séquence d'un message de diffusion également reçu par le récepteur spécifique (21) et précédant ledit au moins un message de diffusion,
- le récepteur spécifique (21) est configuré pour envoyer, au moyen d'un autre message de diffusion, une demande d'émission pour une nouvelle transmission du contenu de message,
- l'un de la pluralité de participants à la communication du groupe de participants à la communication (20, 21, 22, 23, 24) est configuré pour envoyer le contenu de message au destinataire spécifique (21).

9. Participant à la communication configuré en tant qu'émetteur (20) ou récepteur (21, 22, 23, 24) pour une utilisation dans un réseau de télécommunication (100) ou dans un système selon la revendication 8.

10. Programme d'ordinateur comprenant des instructions à l'aide desquelles les étapes d'un procédé selon l'une des revendications 1 à 7 peuvent être mises en œuvre lorsque le programme d'ordinateur est exécuté sur un dispositif programmable, en particulier sur un noeud de réseau sous la forme d'un émetteur (20) et/ou d'un récepteur (21, 22, 23, 24) et/ou d'un participant à la communication (20, 21, 22, 23, 24).

11. Support lisible par ordinateur, prévu pour stocker un programme d'ordinateur, ou signal de support de données, prévu pour transmettre un programme d'ordinateur, le support lisible par ordinateur ou le signal de support de données stockant ou transmettant le programme d'ordinateur selon la revendication 10, ou le support lisible par ordinateur ou le signal de support de données stockant ou transmettant la partie du programme d'ordinateur selon la revendication 10 à exécuter sur le dispositif programmable, en particulier un noeud de réseau sous la forme d'un émetteur (20) et/ou d'un récepteur (21, 22, 23, 24) et/ou d'un participant à la communication (20, 21, 22, 23, 24).
